Europäisches Patentamt

European Patent Office

Office européen des brevets

(11) Publication number: **0 182 561**
**B1**

(12) **EUROPEAN PATENT SPECIFICATION**

(45) Date of publication of patent specification: **16.01.91**

(21) Application number: **85308160.2**

(22) Date of filing: **08.11.85**

(51) Int. Cl.⁵: **F 16 L 17/02,** F 16 L 21/08, F 16 L 47/06

(54) Improvements in or relating to tube couplings.

(30) Priority: **12.11.84 GB 8428532**
**04.04.85 GB 8508943**

(43) Date of publication of application:
**28.05.86 Bulletin 86/22**

(45) Publication of the grant of the patent:
**16.01.91 Bulletin 91/03**

(84) Designated Contracting States:
**AT DE FR IT**

(56) References cited:
**AT-B- 357 832**
**DE-A-2 910 688**
**DE-A-2 922 285**
**DE-B-1 650 115**
**GB-A-2 052 662**
**GB-A-2 132 295**

(73) Proprietor: **Guest, John Derek**
**"Iona" Cannon Hill Way Bray**
**Maidenhead Berkshire (GB)**

(72) Inventor: **Guest, John Derek**
**"Iona" Cannon Hill Way Bray**
**Maidenhead Berkshire (GB)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

**Description**

This invention relates to tube couplings for connection of a tube (whether plastics or metal) to a component, a body member or to another tube.

GB—A—1 520 742 describes and illustrates a tube coupling comprising a body having a throughway with at least one opening to receive a tube to be coupled therewith, a collet having an annular portion and resilient arms extending from the annular portion into the throughway, a cam member in the body and having an internal tapered cam surface reducing in a direction extending out of the body and with which the resilient arms of the collet are engageable to be compressed thereby into engagement with the tube in the collet to clamp the collet in the body. Couplings of that type have been widely used and are entirely satisfactory in most applications. However such couplings do have a limited range over which the resilient arms can be compressed by engagement with the cam and may not therefore be entirely satisfactory for gripping very soft tubing where extra inward movement of the resilient arms is required to take up deflection of the soft wall of the tube and also in the case where the tube external diameter differs considerably from the nominal value for which the coupling was intended.

DE—A—2910688 discloses a different form of tube coupling comprising a socket to receive an end of a tube and an annular compression ring having a frusto-conical outer surface disposed in the socket. The socket has a threaded counter bore to receive a threaded clamping sleeve having a tapered cam surface to cooperate with the frusto-conical surface of the compression ring, the arrangement being such that screwing the clamping sleeve into the socket causes the sleeve to press the compression ring around the tube to lock the tube in the coupling. The compression ring, being wholly enclosed in the socket cannot readily be released to permit a tube to be withdrawn from the coupling other than be dismantling the entire coupling.

DE—B—1650115 discloses a tube coupling comprising a body having a throughway with an opening to receive a tube to be coupled therewith, a split pipe gripping collet located in the throughway between an annular seal carrying member at one end of the collet and a stud screwed into the throughway from the open end of the throughway at the other end of the collet to compress the collet into engagement with the tube and to press the seal carried by the seal carrying member against a seating in the throughway. The disadvantage of this arrangement is that fluid pressure from the end of the tube located in the throughway could overcome the force holding the seal against the seating and escape between the seal and its seating to escape from the throughway. Also the arrangement of a frusto-conical base acting on a split collet to compress the collar and thereby impose a gripping force on the tube is a mechanically inefficient arrangement since the collet has to move both radially inwardly and circumferentially against a high frictional force in order to achieve the gripping action.

This invention provides a tube coupling comprising a body member having a throughway with at least one opening to receive a tube, tube gripping means located in the throughway to receive a tube engaged between a tapered cam surface of a cam member mounted for axial adjustment in the throughway, the tapered cam surface reducing in a direction extending out of the throughway and an oppositely inclined face of an abutment means located in the throughway, movement of the cam member towards the abutment means contracting the gripping means around a tube therein to hold the tube; wherein the tube gripping means comprises a collet having a plurality of resilient arms extending along the throughway and engageable with the tapered cam surface of the cam member whereby movement of a tube engaged by the collet outwardly of the throughway increases the gripping action of the tube by the arms through the inclined cam surface and vice versa, the free ends of the resilient arms engaging the inclined face of the abutment means whereby adjustment of the cam member into the throughway forces the ends of the resilient arms engaged between the cam surface and inclined face of the abutment means inwardly to further increase the gripping action of the arms on a tube, and in that the throughway is formed with an encircling shoulder facing towards and spaced from said opening, and at least one sealing ring is located in the throughway to engage and seal with the throughway, and outer surface of a tube located in the throughway, said ends of the resilient arms of the collet acting directly or indirectly on the sealing ring whereby fluid pressure from the tube acts on the sealing ring to compress the sealing ring in the lengthwise direction of the throughway thereby expanding the ring radially to enhance the sealing action between the ring and the throughway on its outer side and on the tube on its inner side and also to apply a force directly or indirectly to the resilient collet arms to enhance the gripping action of the collet on the tube.

In one arrangement according to the invention the cam member has an encircling screw thread engageable in a screw thread in the hollow body for adjustment of the cam member with respect to the collet and means are provided on the cam member projecting outwardly of an open end of the body for turning the cam member to effect said adjustment.

More specifically the cam member has an annular flange projecting outwardly from the open end of the body member with a roughened outer surface to enable the flange to be gripped for screwing the cam member with respect to the body member to effect said adjustment.

In any of the above arrangements a sealing ring or rings may be mounted in the throughway in the member body to seal with the outer surface of the tube to be inserted into the body member.

Also in any of the above arrangements a floating ring is disposed in the throughway between the sealing rings may be disposed in the throughway between the sealing ring(s) and the resilient arms, the ring having side faces which converge towards the inner periphery of the ring with which the sealing ring and ends of the resilient arms respectively engage.

In a further feature of the invention a screw threaded insert sleeve is disposed in the throughway in the hollow body and the cam member is disposed in the insert sleeve and has a screw thread engaging the thread in the sleeve for adjustment of the cam member.

The following is a description of some specific embodiments of the invention, reference being made to the accompaning drawings in which:

Figure 1 is a partly sectioned diagrammatic view of a tube coupling;

Figures 2 to 6 are sectional views illustrating a number of modifications to the tube coupling of Figure 1;

Figure 7 is a sectional view through a further form of coupling;

Figure 8 is a perspective view of an end part of a coupling adapted for adjustment by a special form of tool; and

Figure 9 shows the tool.

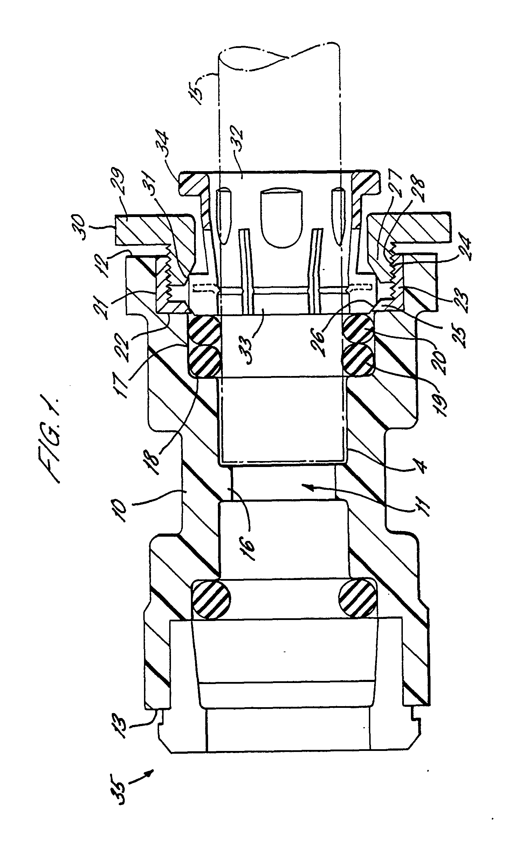

Referring firstly to Figure 1 of the drawings, there is shown a double ended coupling suitable, for example, for connecting two lengths of pipe together, for example a length of plastic piping to a length of stainless steel tubing. The coupling comprises a generally cylindrical from plastics body 10 having a throughway 11 extending between opposite ends 12, 13 of the body in which couplings are provided for receiving and locking tubes in the body.

The throughway 11 is formed with a main bore 14 to receive and end part of tubes 15 (only one of which is shown) inserted into the body. At the centre of the bore 14 there is a raised shoulder 16 and tubes 15 inserted from either end of the coupling located against either side of the shoulder. To the right hand side of the shoulder 16 as viewed in the drawing, a first counter bore 17 is formed partway along the bore 14 connected to the main bore 14 by a shoulder 18 to receive two resilient O-ring seals 19, 20 located side-by-side in the counter bore to engage and seal with the outer surface of the tube 15. The counter bore 17 gives way to a second counter bore 21 connected to the counter bore 17 by an annular shoulder 22, the counter bore 21 extending to the end 12 of the body.

The body 10 is an injection plastics moulding and a brass or other material sleeve 23 formed with a fine internal screw thread 24 and a radially inwardly extending flange 25 at the end of the sleeve remote from the end 12 of the body to lie against the shoulder 22. The inner edge of the flange 25 is angled as indicated at 26 to provide a taper in the direction leading into the throughway.

A cam member 27 in the form of an annular sleeve has an external screw thread 28 to engage in the screw thread 24 in the sleeve and has an out-turned flange 29 at an end of the cam member projecting out of the throughway. The cam is formed from brass or other metal similar to that used for the sleeve 23 and the roughened surface provided on the edge 30 of the flange 29 permits the cam member to be readily rotated by hand with respect to the sleeve.

The internal surface of the cam member is formed with a tapered cam surface 31 which converges towards the open end of the throughway. A collet 32 is disposed within the end of the throughway and has a plurality of resilient arms 33 projecting into the throughway. The arms have projection on their inner sides which may be formed with metal inserts to engage and grip the outer surface of a tube 15 inserted through the collet. The ends of the resilient arms bear against the O-ring seal 20 and the outer surfaces of the arms are engageable with the converging cam surface 31 on the cam member. The part of the collet projecting out of the throughway beyond the cam member 27 is formed with an out-turned flange 34 to enable the collet to be adjusted manually with respect to the tube.

When a tube such as a stainless steel tube is inserted in the throughway through the collet and sealing rings 19, 20 into engagement with the shoulder 16, the resilient arms 33 of the collet will engage the tube and any attempt to withdraw the tube will cause the resilient arms to be forced with an increasing pressure into gripping engagement with the tube by the action of the converging cam surface 31 on the resilient arm thus preventing the tube from being extracted from the throughway. If of course it is required to extract the tube, the collet can be pressed forwardly against the sealing rings manually by engaging the flange 34 and, when held in that condition, the tube can be withdrawn.

The gripping action of the resilient arms on the tube through the action of the cam surface 31 can be increased by screwing the cam member 27 further into the screw threaded sleeve 23 by manually rotating the flange 29 of the cam member. As the cam member is screwed further and further into the sleeve, so the converging cam surface 31 of the cam member slides over the resilient arms 33 increasing the compressive force applied by the cam surface to the resilient arms and thereby the resilient arms to the tube within the collet to increase the gripping action of the resilient arms on the tube. Likewise, by screwing the cam member outwardly of the sleeve 23 the gripping action of the resilient arms on the tube is reduced.

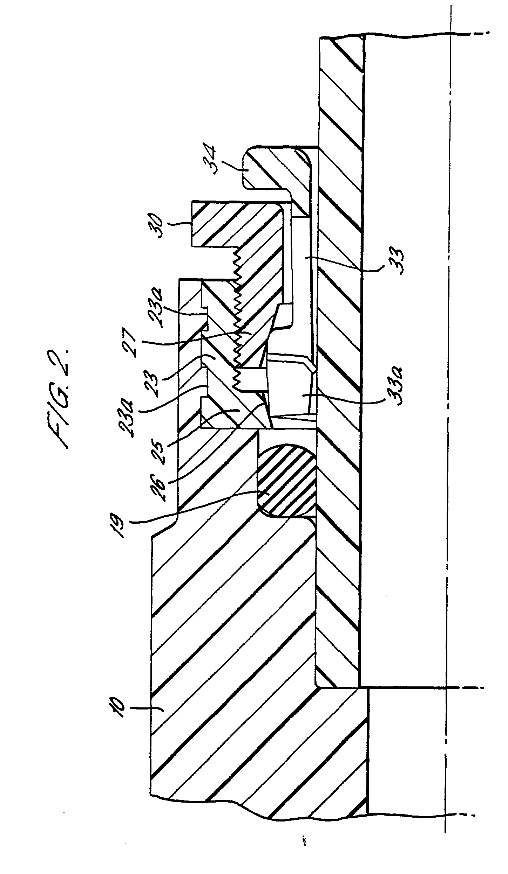

Referring now to Figure 2 of the drawings, the arrangement shown is generally similar to that of Figure 1 except that only a single O-ring seal 19 is mounted in the counter-bore 17 and in that the heads 33a at the ends of the resilient arms 33 of the collet are formed with a shallow tapering surface to bear against the convergent face 26 on the in-turned flange 25 as opposed to the sharply angled corner on the heads of the previous arrangement. The shallow taper assists in pressing the heads 33a inwardly as the cam member 27 is tightened into the outer sleeve 23. Also the outer sleeve 23 is formed with peripheral grooves 23a into which the encircling wall of the body 10 is "keyed" to lock the sleeve in the end of the body. The arrangement is otherwise similar to that described above.

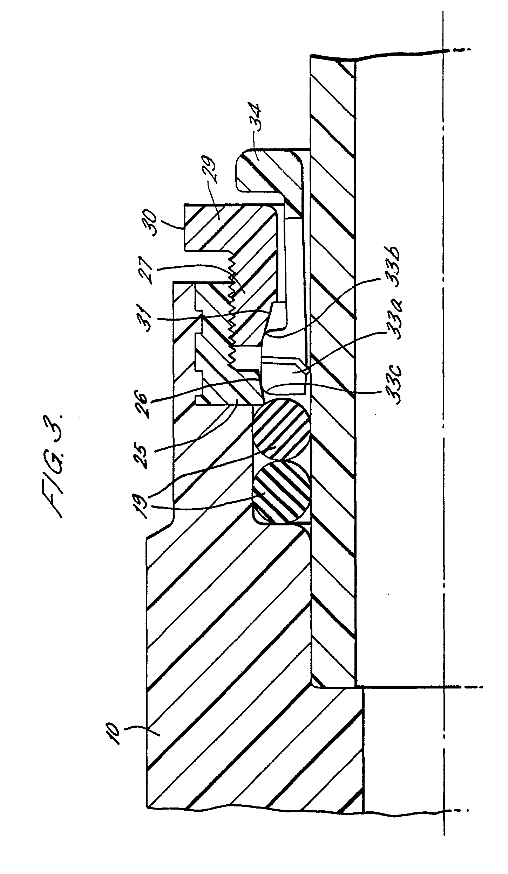

Figure 3 shows some modifications of the arrangement of Figure 2 comprising the provision of two O-ring seals 19 in place of the single seal of the arrangement of Figure 2. The heads 33 of the resilient arms on the collet are somewhat shorter and have round outer ends 33b and 33c to engage respectively the tapered cam 31 and angled face 27 of the flange 26. The arrangement is otherwise similar to that described above.

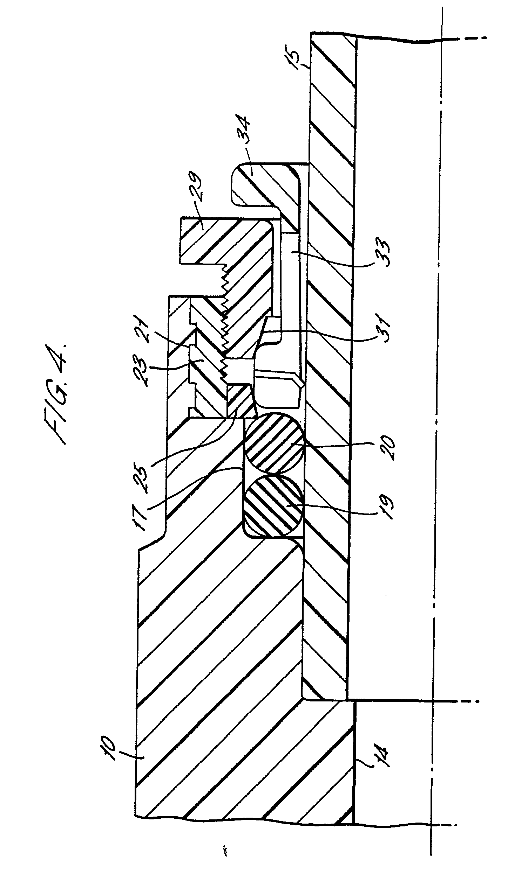

Figure 4 shows a further modification to the arrangement of Figure 3 in which the inturned flange 25 at the inner end of the sleeve 23 is formed as a separate internal washer rather than an integral element of the sleeve. The arrangement is otherwise similar to that described above.

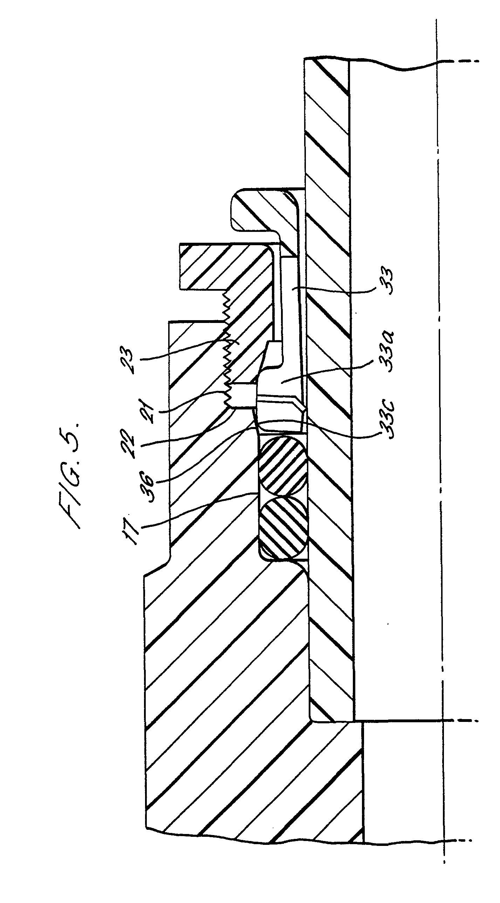

Figure 5 shows a further modification in which the separate insert sleeve 25 is dispensed with and the counter-bore 21 is formed with an internal screw thread with which the external thread of the cam engages. The end part of the counter-bore 17 is flared at the end of the counter-bore adjacent the step 22 to provide a convergent cam face 36 against which the outer corner 33c of the heads of the resilient arms engage in place of the angled face 26 on flange 25 of the previous arrangement.

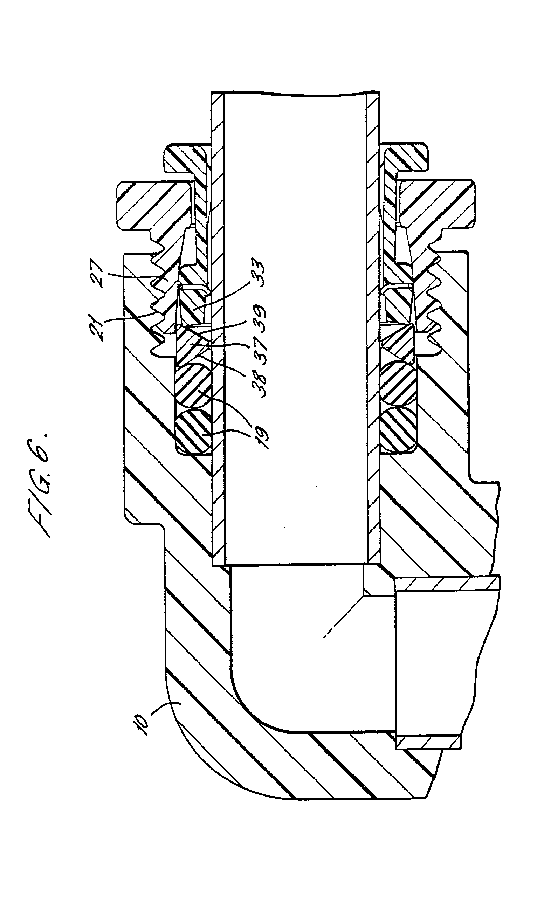

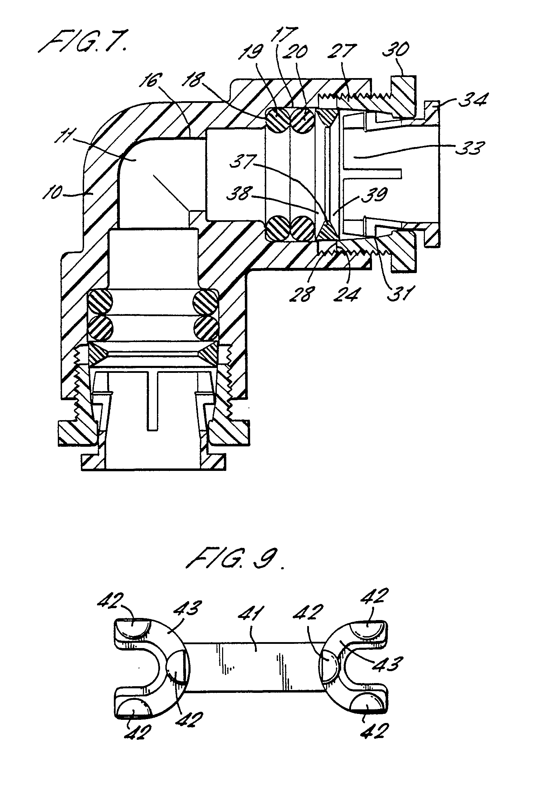

Figure 6 shows a modification to the arrangement of Figure 5 in which an insert ring 37 is disposed between the ends of the heads 33 of the collet and the sealing rings 19. The ring has side faces 38, 39 which converge towards the inner periphery of the ring to bear against the adjacent O-ring seal 19 and the adjacent ends of the heads of the collet respectively. The angled face 39 engaging the heads of the collet serves to hold the collet end and prevents distortion when the collet engages with the inclined cam face of the encircling cam member 27, Figure 7 also shows a coarse form of screw thread between the cam member 27 and counter-bore 21 in the body 10.

It will be appreciated that many modifications may be made to the above embodiments. For example the metal insert sleeve could be formed integrally in plastics with the body member and the cam member 27 can also be formed from plastics.

The coupling at the other end of the body member may be similar to that described above or may be of the form described and illustrated in GB—A—1520742 or any of the modified forms of that coupling described and illustrated in GB—A—1573757, 2007322, 2051280, 2052662, 2132295, 2131903, 2143603, 2165604, 2150243 or 2120339.

The invention is equally applicable to elbow or other forms of joint and is applicable to single tube couplings as well as double tube couplings such as that described above. Figure 7 illustrates, by way of example, a double tube coupling of elbow form.

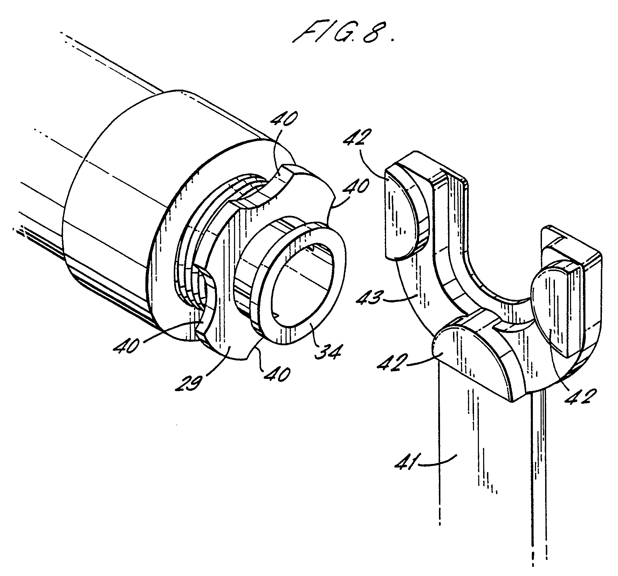

Referring now to Figures 8 and 9 of the drawings, the out turned flange 29 of cam member 27 of the coupling illustrated has "scallop" shaped recesses 40 around its periphery at equi-spaced locations. An open ended spanner 41 is provided having three equi-spaced projections 42 around the open-ended sockets 43 thereof to engage in the recesses 40 of the flange 29 for turning the cam member 27 with respect to its coupling body to increase or reduce the gripping action of the collet 34 in the cam member on the tube 15 in the collet. This arrangement is applicable to all the forms of coupling body described above.

## Claims

1. A tube coupling comprising a body member (10) having a throughway with at least one opening (11) to receive a tube (15), tube gripping means (13) located in the throughway to receive a tube engaged between a tapered cam surface of a cam member (22) mounted for axial adjustment in the throughway, the tapered cam surface (31) reducing in a direction extending out of the throughway and an oppositely inclined face of an abutment means (25) located in the throughway, movement of the cam member towards the abutment means contracting the gripping means around a tube therein to hold the tube; wherein the tube gripping means comprises a collet having a plurality of resilient arms (33) extending along the throughway and engageable with the tapered cam surface (31) of the cam member (22) whereby movement of a tube engaged by the collet outwardly of the throughway increases the gripping action of the tube by the arms through the inclined cam surface and vice versa, the free ends (33a) of the resilient arms engaging the inclined face of the abutment means whereby adjustment of the cam member into the throughway forces the ends of the resilient arms engaged between the cam surface and inclined face of the abutment means inwardly to further increase the gripping action of the arms on a tube, and in that the throughway is formed with an encircling shoulder (18) facing towards and spaced from said opening (11), and at least one sealing ring (19) is located in the throughway to engage and seal with the throughway, and outer surface of a tube located in the throughway, said ends of the resilient arms of the collet acting directly or indirectly on the sealing ring whereby fluid pressure from the tube acts on the sealing ring to compress the sealing ring in the lengthwise direction of the throughway thereby expanding the ring radially to enhance the sealing action between the ring and the throughway on its outer side and on the tube on its inner side and also to apply a force directly or indirectly to the resilient collet arms to enhance the gripping action of the collet on the tube.

2. A tube coupling as claimed in claim 1, characterised in that the cam member (31) has an encircling screw thread (28) engageable in a screw thread (24) in the hollow body (10) for adjustment of the cam member with respect to the collet and means (29, 30) are provided on the cam member projecting outwardly of an open end of the body for turning the cam member to effect said adjustment.

3. A tube coupling as claimed in claim 2, characterised in that the cam member (31) has an annular flange (29) projecting outwardly from the open end of the body member with a roughened outer surface (30) to enable the flange to be gripped for screwing the cam member with respect to the body member to effect said adjustment.

4. A tube coupling as claimed in any of the preceding claims, characterised in that a sealing ring or rings (19, 20) is/are mounted in the throughway in the member body to seal with the outer surface of the tube to be inserted into the body member.

5. A tube coupling as claimed in any of Claims 1 to 4, characterised in that a floating ring (37) is disposed in the throughway between the sealing ring(s) (19, 20) and the resilient arms (33), the ring having side faces which converge towards the inner periphery of the ring with which the sealing ring and ends of the resilient arms respectively engage.

6. A tube coupling as claimed in any one of the preceding claims a screw threaded insert sleeve is disposed in the throughway in the hollow body and the cam member is disposed in the insert sleeve and has a screw thread engaging the thread in the sleeve for adjustment of the cam member.

**Patentansprüche**

1. Rohrkupplung, die ein Körperstück (10), welches einen Durchgang mit zumindeste einer Öffnung (11) zur Aufnahme eines Rohres (15) aufweist, sowie ein in dem Durchgang angeordnetes Rohrklemmelement (33) zur Aufnahme eines Rohres umfaßt, welches Klemmelement zwischen einer spitz zulaufenden Nockenfläche eines Nockenelementes (27), welches zur axialen Einstellung in dem Durchgang befestigt ist und dessen spitz zulaufende Nockenfläche (31) sich von dem Durchgang nach außen zu verjüngt, und einer gegenüberliegenden, in dem Durchgang angeordneten, geneigten Fläche eines Widerlagerelementes (25) befestigt ist, wobei eine Bewegung des Nockenelementes in Richtung des Widerlagerelementes das Klemmelement um ein darinliegendes Rohr zur Befestigung des Rohres zusammenzieht; wobei das Rohrklemmelement eine Hülse mit einer Vielzahl von elastischen Armen (33) umfaßt, die sich entlang des Durchganges erstrecken und mit der spitz zulaufenden Nockenfläche (31) des Nockenelementes (22) in Eingriff gebracht werden können, wodurch die Bewegung eines Rohres, welches durch die Hülse festgeklemmt ist, aus dem Durchgang hinaus, die Klemmkraft der Arme auf das Rohr durch die geneigte Nockenfläche erhöht und umgekehrt, wobei die freien Enden (33a) der elastischen Arme auf die geneigte Fläche des Widerlagerelementes auftreffen, wodurch die Einstellung des Nockenelementes in den Durchgang die Enden der elastischen Arme, die zwischen der Nockenfläche und der geneigten Fläche des Widerlagerelementes gehalten werden, nach innen zwingt und die Klemmkraft der Arme auf ein Rohr zu erhöht; und wobei der Durchgang mit einer umgebenden Schulter (18) gebildet wird, die zur Öffnung (11) zeigt und im Abstand zu dieser liegt, und zumindest ein Dichtungsring (19) in dem Durchgang für die Verbindung und den dichten Verschluß mit dem Durchgang und der Außenfläche eines im Durchgang befindlichen Rohres angeordnet ist, wobei die Enden der elastischen Arme der Hülse direkt oder indirekt auf den Dichtungsring wirken, wodurch Dichtungsring wirken, wodurch Flüssigkeitsdruck von dem Rohr auf den Dichtungsring wirkt und den Dichtungsring in Längsrichtung des Durchganges zusammenpreßt und dadurch eine radiale Ausdehnung des Ringes bewirkt, zur Verstärkung der Dichtung zwischen dem Ring und dem Durchgang an seiner Außenseite und dem Rohr an seiner Innenseite, sowie auch zur direkten oder indirekten Ausübung einer Kraft auf die elastischen Hülsenarme, zur Verstärkung der Klemmkraft der Hülse auf das Rohr.

2. Rohrkupplung nach Anspruch 1, dadurch gekennzeichnet, daß das Nockenelement (31) ein umgebendes Schraubengewinde (28), welches mit einem Schraubengewinde (24) in dem Hohlkörper (10) zur Einstellung des Nockenelementes in bezug zur Hülse in Eingriff gebracht werden kann, und auf dem Nockenelement Mittel (29, 30) zu der die Einstellung bewirkenden Drehung des Nockenelementes vorgesehen sind, die von einem offenen Ende des Körpers nach außen ragen.

3. Rohrkupplung nach Anspruch 2, dadurch gekennzeichnet, daß das Nockenelement (31) einen ringförmigen Flansch (29) umfaßt, der von dem offenen Ende des Körperteiles nach außen ragt und eine gerauhte Außenfläche (30) aufweist, so daß der Flansch für das Drehen des Nockenelementes in bezug auf das Körperstück ergriffen und somit die Einstellung bewirkt werden kann.

4. Rohrkupplung nach einem der vorhergehenden Ansprüche, dadurch gekennzeichnet, daß ein oder mehrere Dichtungsringe (19, 20) in dem Durchgang im Körperstück zur Abdichtung mit der Außenfläche des Rohres befestigt sind, welches in den Körperteil eingeführt wird.

5. Rohrkupplung nach einem der Ansprüche 1 bis 4, dadurch gekennzeichnet, daß ein Gleitring (37) in dem Durchgang zwischen den Dichtungsringen (19, 20) und den elastischen Armen (33) angebracht ist, wobei der Ring Seitenflächen aufweist, die zu dem inneren Umfang des Ringes konvergieren, in den die Dichtungsringe beziehungsweise die Enden der elastischen Arme eingreifen.

6. Rohrkupplung nach einem der vorhergehenden Ansprüche, dadurch gekennzeichnet, daß eine mit Gewinde versehene Einsetzhülse in dem Durchgang in dem Hohlkörper angeordnet ist und das Nockenelement in der Einsetzhülse angebracht ist und ein Schraubengewinde aufweist, welches in das Gewinde in der Hülse zur Einstellung des Nockenelementes eingreift.

## Revendications

1. Raccord de tube comprenant un corps (10) qui présente un passage traversant muni d'au moins une ouverture (11) et destiné à recevoir un tube (15), des moyens (13) de serrage du tube logés dans le passage traversant pour recevoir un tube et serrés entre une surface de came à section décroissante appartenant à une came (22) montée pour décrire un mouvement d'ajustement axial dans le passage traversant, la surface de came (31) à section décroissante diminuant de section dans le sens qui sort du passage traversant, et une face inclinée en sens inverse, appartenant à une butée (25) logée dans le passage traversant, le mouvement de la came vers la butée contractant les moyens de serrage autour d'un tube logé dans ces moyens, pour retenir le tube; dans lequel les moyens de serrage du tube comprennent une pince possédant une pluralité de bras élastiques (33) qui s'étendent le long du passage traversant et peuvent être mis en prise avec la surface de came (31) à section décroissante de la came (22), de sorte que le mouvement d'un tube serré par la pince dans le sens qui sort du passage traversant renforce l'action de serrage que les bras exercent sur le tube sous l'action de la surface de came inclinée et vice versa, les extrémités libres (33a) des bras élastiques attaquant la face inclinée de la butée, de sorte que le mouvement d'ajustement de la came dans le sens qui pénètre dans le passage traversant repousse à force vers l'intérieur les extrémités des bras élastiques serrées entre la surface de came et la face inclinée de la butée, pour renforcer encore l'action de serrage des bras sur un tube, et dans lequel le passage traversant est muni d'un épaulement encerclant (18) qui regarde vers ladite ouverture (11) et en est espacé, et au moins une bague d'étanchéité (19) est logée dans le passage traversant pour s'appuyer à joint étanche contre le passage traversant et contre la surface extérieure du tube logé dans le passage traversant, lesdites extrémités des bras élastiques de la pince agissant directement ou indirectement sur la bague d'étanchéité, de sorte que la pression du fluide qui s'échappe du tube agit sur la bague d'étanchéité pour comprimer cette bague d'étanchéité dans la direction de la longueur du passage traversant, en dilatant ainsi la bague radialement pour renforcer l'action d'étanchéité entre la bague et le passage traversant sur son côté extérieur et sur le tube sur son côté intérieur, et également pour appliquer une force, directement ou indirectement, sur les bras élastiques de la pince, pour renforcer l'action de serrage de la pince sur le tube.

2. Raccord de tube selon la revendication 1, caractérisé en ce que la came (31) possède un filetage encerclant (28) qui peut se visser dans le filetage (24) du corps creux (10) pour l'ajustement de la came par rapport à la pince, et en ce qu'il est prévu sur la came des moyens (29, 30) qui font saillie à l'extérieur de l'extrémité ouverte du corps pour permettre de faire tourner la came pour l'exécution dudit ajustement.

3. Raccord de tube selon la revendication 2, caractérisé en ce que la came (31) possède une collerette annulaire (29) qui fait saillie à l'extérieur de l'extrémité ouverte du corps et est munie d'une surface extérieure (30) rendue rugueuse pour permettre de saisir la collerette afin de visser la came par raport au corps pour l'exécution dudit ajustement.

4. Raccord de tube selon une quelconque des revendications précédentes, caractérisé en ce qu'une bague ou plusieurs bagues d'étanchéité (19, 20) est ou sont montée(s) dans le passage traversant du corps pour former un joint étanche avec la surface extérieur du tube qu'il s'agit d'insérer dans le corps.

5. Raccord de tube selon une quelconque des revendications 1 à 4, caractérisé en ce qu'une bague flottante (37) est disposée dans le passage traversant entre la ou les bague(s) d'étanchéité (19, 20) et les bras élastiques (33), la bague possédant des faces latérales qui convergent vers la périphérie intérieure de cette bague et avec lesquelles la bague d'étanchéité et les extrémités des bras élastiques coopèrent respectivement.

6. Raccord de tube selon une quelconque des revendications précédentes, caractérisé en ce qu'un manchon rapporté fileté est disposé dans le passage traversant formé dans les corps creux et en ce que la came est disposée dans le manchon rapporté et possède un filetage qui coopère avec le filetage du manchon pour l'exécution de l'ajustement de la came.

FIG.1.

FIG. 2.

FIG. 3.

FIG. 4.

FIG.5.

FIG.6.

EP 0 182 561 B1

FIG.7.

FIG. 9.

FIG.7.

FIG. 9.

FIG. 8.